# NEUE EUROPÄISCHE PATENTSCHRIFT

(11) **EP 2 912 932 B2**
(45) Veröffentlichungstag und Bekanntmachung des Hinweises auf die Entscheidung über den Einspruch: **25.09.2019**
(45) Hinweis auf die Patenterteilung: 31.08.2016
(21) Anmeldenummer: 15401012.8
(22) Anmeldetag: 25.02.2015
(51) Int. Cl.: A01B 69/00

(54) **Steuereinheit**
Control unit
Unité de commande

(30) Priorität: 26.02.2014 DE 102014102489
(43) Veröffentlichungstag der Anmeldung: 02.09.2015
(73) Patentinhaber: Amazonen-Werke H. Dreyer GmbH & Co. KG, 49205 Hasbergen (DE)
(72) Erfinder: Kötter, Heiner, 49086 Osnabrück (DE); Köcher, Michael, 49205 Hasbergen (DE)
(74) Vertreter: Grünecker Patent- und Rechtsanwälte PartG mbB

(56) Entgegenhaltungen:
- EP-A1- 1 402 766
- EP-A1- 2 583 544
- EP-A2- 1 602 267
- EP-A2- 2 221 702
- WO-A1-2012/015957
- WO-A1-2012/091990
- WO-A1-2012/174134
- WO-A1-2014/099791
- DE-A1-102004 027 242
- DE-A1-102006 015 203
- US-A- 5 220 876
- US-A- 5 870 689
- US-A1- 2007 168 116
- US-A1- 2007 255 470
- US-A1- 2008 195 270
- US-A1- 2012 209 506
- US-B1- 6 236 924
- US-B2- 7 747 370
- US-B2- 8 078 367
- US-B2- 8 145 390
- US-B2- 8 204 654
- US-B2- 8 209 075
- US-B2- 8 498 788
- ROBERT "BOBBY" GRISSO ET AL: "Precision Farming Tools: GPS Navigation", VIRGINIA COOPERATIVE EXTENSION, no. 442-501, 1 May 2009 (2009-05-01), XP055387257,
- "Farm With Precision With New Holland New Holland Agriculture", NEW HOLLAND PRECISION LAND MANAGEMENT, 2011, pages 1-24, XP055387271,
- HILL, P.: "LATEST GPS KIT FROM THE PRECISION FARMING EVENT FARMERS WEEKLY", Navigation, 11 March 2013 (2013-03-11), pages 1-3, XP055387275,
- PRECISION PLANTING: "Beyond the Field Map Precision Planting", YOUTUBE VIDEO: BEYOND THE FIELD MAP PRECISION PLANTING, 25 October 2013 (2013-10-25), XP055387325,
- WAYNE WENZEL: "Precision ag upgrade", FARM INDUSTRY NEWS, 1 February 2006 (2006-02-01), XP055387354,

## Beschreibung

Die vorliegende Erfindung betrifft eine Steuereinheit und ein Verfahren für eine landwirtschaftliche Arbeitsmaschine zum Anzeigen von zu bearbeitenden Bereichen eines Feldes.

Um Bauern die Arbeit auf zu bearbeitenden Feldern zu erleichtern, gibt es Bordcomputer für landwirtschaftliche Arbeitsmaschinen, die beispielsweise über ein Display Hilfestellungen anbieten. So ist es bekannt, ein zu bearbeitendes Feld in parallele Streifen einzuteilen und dem Fahrer eine Fahrhilfe bereitzustellen. Das Erstellen der parallelen Streifen erfolgt weitgehend automatisch und lässt nur wenig Einflussnahme durch den Benutzer zu.

Viele Anwendungen erfordern jedoch sehr spezielle Hilfestellungen, was mit den gängigen Bordcomputern nicht bewirkt werden kann.

Es ist daher Aufgabe der vorliegenden Erfindung, eine Steuereinheit und ein Verfahren für eine landwirtschaftliche Arbeitsmaschine bereitzustellen, das eine flexiblere Interaktion ermöglicht.

Diese Aufgabe wird erfindungsgemäß durch die Steuereinheit nach Anspruch 1 und das Verfahren nach Anspruch 6 gelöst. Vorteilhafte Weiterbildungen der Erfindung sind in den Unteransprüchen erfasst.

Die erfindungsgemäße Steuereinheit für eine landwirtschaftliche Arbeitsmaschine umfasst eine Eingabeeinrichtung und eine Anzeigeeinrichtung, die wenigstens ein landwirtschaftlich zu bearbeitendes Feld anzeigen kann, wobei die Eingabeeinrichtung und die Anzeigeeinrichtung in einem berührungsempfindlichen Bildschirm integriert sind und die Steuereinheit derart ausgebildet und/oder konfiguriert ist, dass wenigstens ein Bereich des zu bearbeitenden Feldes durch Berührung markiert und diesem Bereich eine Eigenschaft zugeordnet werden kann, wobei der Bereich in der Anzeigeeinrichtung angezeigt werden kann. Auf diese Weise können diverse Bereiche auf einem zu bearbeitenden Feld markiert werden und ihm bestimmte Eigenschaften zugeordnet werden, wie beispielsweise, dass der markierte Bereich als Vorgewende verwendet werden soll oder Ähnliches.

Erfindungsgemäß ist die Steuereinheit dadurch gekennzeichnet, dass die Steuereinheit in einem Bereich der Feldgrenze ein Vorgewende anlegen kann, wenn der Bereich markiert wird. Diese Vorgehensweise kann von der Steuereinheit als Standard beim Markieren eines Bereichs der Feldgrenze vorgesehen sein, kann so aber auch vom Bediener vorgegeben werden, was das Erstellen von Vorgewenden erheblich erleichtert.

In einer Weiterbildung dieser Ausführungsform kann die Steuereinheit das Vorgewende auch in Abhängigkeit von technischen Merkmalen der landwirtschaftlichen Arbeitsmaschine bestimmen und das Vorgewende kann in der Anzeigeeinrichtung angezeigt werden. Mit dieser Ausführungsform ist es möglich, beispielsweise die Arbeitsbreite der Arbeitsmaschine beim Erstellen des Vorgewendes zu berücksichtigen und die Anzeige auf der Anzeigeeinrichtung entsprechend zu modifizieren.

Es kann auch vorgesehen sein, dass die Steuereinheit Leitlinien erstellen kann, die annähernd parallel verlaufen und die Leitlinien von einer als Vorgewende markierten Seite zu einer anderen als Vorgewende markierten Seite des Feldes verlaufen. Mit dieser Ausführungsform der Erfindung kann nicht nur dem markierten Teil eine Eigenschaft zugeordnet werden sondern gleichzeitig die weiteren relevanten Leitlinien erstellt werden.

In einer weiteren Ausführungsform ist die Steuereinheit dadurch gekennzeichnet, dass die Breite des Vorgewendes von einer Arbeitsbreite der landwirtschaftlichen Arbeitsmaschine abhängen kann. So kann der markierte Bereich auf der Anzeigeeinrichtung auch entsprechend der Arbeitsbreite der Arbeitsmaschine angezeigt werden.

Gemäß einer Ausführungsform kann eine Vielzahl von landwirtschaftlichen Funktionen in einem internen Speicher der Steuereinheit gespeichert werden und/oder technische Merkmale der landwirtschaftliche Arbeitsmaschine in dem internen Speicher gespeichert werden und/oder geographische Informationen können in dem internen Speicher gespeichert werden und die im internen Speicher gespeicherten Daten können für das Zuordnen der Eigenschaft zu dem markierten Bereich verwendet werden. Es können so beispielsweise Standards für bestimmte Teilbereiche eines Feldes definiert werden, wobei markierten Bereichen in diesen Teilbereichen bestimmte Eigenschaften standardmäßig zugeordnet werden. Andererseits kann mit dieser Ausführungsform dem Bediener eine große Auswahl an Funktionen zur Verfügung gestellt werden.

Unter Verwendung beispielsweise einer der obigen Steuereinheiten kann ein Verfahren zum Erstellen von bestimmten Bereichen für ein landwirtschaftlich zu bearbeitendes Feld verwirklicht werden, wobei basierend auf einer Markierung eines bestimmten Bereichs des Feldes mittels eines berührungsempfindlichen Bildschirms diesem Bereich eine Eigenschaft zugeordnet wird und der Bereich in einer in den berührungsempfindlichen Bildschirm integrierten Anzeigeeinrichtung angezeigt wird. Dieses Verfahren erlaubt eine sehr flexible Zuordnung bestimmter Eigenschaften zu einzelnen Bereichen eines Feldes.

Erfindungsgemäß wird ein Vorgewende angelegt, wenn ein Bereich an einer Feldgrenze des Feldes markiert wird. Mit dieser Ausführungsform kann das Vorgewende flexibel und mit sehr geringem Aufwand für den Bediener erstellt werden.

Es kann weiterhin vorgesehen sein, dass das Vorgewende auch in Abhängigkeit von technischen Merkmalen der landwirtschaftlichen Arbeitsmaschine erstellt wird. Es können so beispielsweise der Wendekreis und/oder die Arbeitsbreite der Arbeitsmaschine beim Erstellen des Vorgewendes berücksichtigt werden.

Weiterhin ist in einer Ausführungsform vorgesehen, dass nach Erstellen des Vorgewendes annähernd parallel verlaufende Leitlinien erstellt werden, die von einer als Vorgewende markierten Seite zu einer anderen als Vorgewende markierten Seite des Feldes verlaufen und wobei die Leitlinien von der Anzeigeeinrichtung angezeigt werden. Der Bediener kann so nicht nur das Vorgewende sondern auch die weiteren Leitlinien zum Bearbeiten des Feldes mit sehr geringem Aufwand erstellen.

In einer vorteilhaften Weiterbildung der Erfindung hängt die Breite des Vorgewendes von der Arbeitsbreite der landwirtschaftlichen Arbeitsmaschine ab. Mit dieser Ausführungsform kann die Erstellung des Vorgewendes so erfolgen, dass spätere Korrekturen, beispielsweise durch den Fahrer, nicht mehr notwendig sind.

Es kann auch vorgesehen sein, dass die Feldgrenze des Feldes wenigstens drei Seiten umfasst und basierend auf der Markierung einer ersten Seite als Vorgewende eine zweite, der ersten Seite gegenüberliegende Seite als Vorgewende markiert wird. Es ist so nicht mehr notwendig, dass sämtliche Seiten von der Steuereinheit als Vorgewende markiert werden und ferner genügt es, wenn der Bediener nur eine Seite als Vorgewende markiert, so dass die entsprechend gegenüberliegende Seite automatisch als Vorgewende markiert wird.

In einer weiteren Ausführungsform ist das Verfahren dadurch gekennzeichnet, dass die Eigenschaft dem markierten Bereich in Abhängigkeit von in einem internen Speicher der Steuereinheit gespeicherten Informationen über eine Vielzahl von landwirtschaftlichen Funktionen und/oder technischen Merkmalen der landwirtschaftlichen Arbeitsmaschine und/oder geographische Informationen zugeordnet wird. Dem Bediener wird so eine große Auswahl an Parametern und daraus ableitbaren Eigenschaften von markierten Bereichen zur Verfügung gestellt.
- Fig. 1 a-c: Schematische Darstellung einer Ausführungsform des Verfahrens.
- Fig. 2a+b: Schematische Darstellungen weiterer Ausführungsformen des Verfahrens.

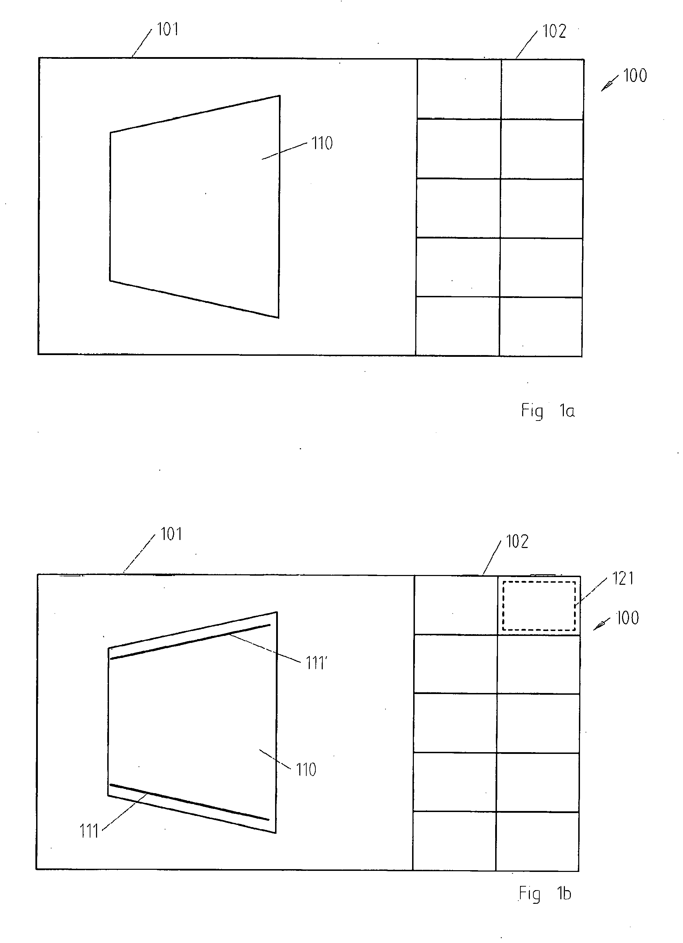

Fig. 1a-c zeigt eine schematische Darstellung einer Steuereinheit 100 bzw. eines Bordcomputers 100 für eine landwirtschaftliche Arbeitsmaschine, der zur Ausführung des erfindungsgemäßen Verfahrens geeignet ist. Die Steuereinheit 100 umfasst eine Eingabeeinrichtung 102 und eine Anzeigeeinrichtung 101. Sie kann weiterhin nicht gezeigte Komponenten wie einen internen Speicher oder Verarbeitungseinrichtungen wie Prozessoren umfassen. Diese sind für Bordcomputer oder Steuereinheiten für landwirtschaftliche Arbeitsmaschinen bekannt.

Es ist vorgesehen, dass in der Anzeigeeinrichtung das von dem Bediener zu bearbeitende Feld 110 angezeigt wird. Dabei kann eine sehr detaillierte Darstellung auch unter Bezug der gesamten Umgebung erfolgen und beispielsweise Straßen verzeichnet sein. Prinzipiell sollte die Anzeige des Feldes 110 jedoch wenigstens die Feldgrenzen umfassen.

Die Eingabeeinrichtung und die Anzeigeeinrichtung sind gemeinsam als berührungsempfindlicher Bildschirm (Touchscreen) ausgebildet, so dass im Wesentlichen mit der gesamten dargestellten Oberfläche interagiert werden kann. Alternativ ist zumindest vorgesehen, dass die Anzeigeeinrichtung 101 berührungssensitiv ist. Die Eingabeeinrichtung 102 kann zusätzlich auch noch Knöpfe oder Schalter umfassen.

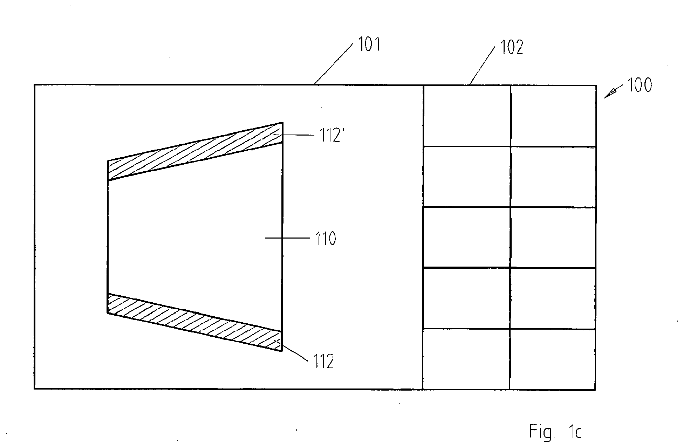

Das in Fig. 1 a dargestellte unbearbeitete Feld 110 kann gemäß dem erfindungsgemäßen Verfahren vom Bediener über Berührung der Anzeigeeinrichtung 101 an bestimmten Stellen 111 und 111' markiert werden. Die Bereiche 111 und 111' sind prinzipiell beliebig. Ebenso müssen nicht unbedingt zwei Bereiche markiert werden, es können auch mehr Bereiche oder auch nur ein Bereich markiert werden. Vorzugsweise wird die Markierung auf der Anzeigeeinrichtung 101 angezeigt. Durch Interaktion mit der Eingabeeinrichtung 102 kann dem markierten Bereich 111 und 111' beispielsweise durch Drücken der Taste 121 (Fig. 1 b) eine bestimmte Eigenschaft zugeordnet werden. Diese Eigenschaft kann entweder standardmäßig in einem Speicher der Steuereinheit hinterlegt sein oder kann speziell durch den Bediener eingegeben werden.

In der in Fig. 1c dargestellten Ausführungsform bewirkt die Interaktion mit der Eingabeeinrichtung beispielsweise über die Taste 121, dass die in Fig. 1b markierten Bereiche 111 und 111' in Fig. 1c als Vorgewendebereiche 112 und 112' dargestellt werden. Ihnen wurde somit durch Markierung und Interaktion mit der Eingabeeinrichtung eine bestimmte Eigenschaft zugeordnet, die zusammen mit dem markierten Bereich auf der Anzeigeeinrichtung 101 dargestellt wird. Dabei kann vorgesehen sein, dass die Anzeige der markierten Bereiche 112 und 112' nicht willkürlich erfolgt sondern beispielsweise auf bestimmten technischen Merkmalen der landwirtschaftlichen Arbeitsmaschine basiert. So kann insbesondere im Falle von Vorgewenden 112 und 112' die Ausdehnung des Bereichs von der Arbeitsbreite der landwirtschaftlichen Arbeitsmaschine aber auch vom benötigten Wendekreis abhängen.

Für das Festlegen von Vorgewenden ist es nicht notwendig, dass zwei gegenüberliegende Seiten des Feldes 110, wie in Fig. 1b dargestellt, markiert werden. Ebenso können zwei aneinander angrenzende Seiten der Feldgrenze des Feldes 110 als Bereiche für Vorgewende markiert werden. Weiterhin ist vorgesehen, dass z.B. für das Erstellen von Vorgewenden nicht jeder Pixel des dargestellten Feldes 110 an der entsprechenden Feldgrenze markiert werden muss, sondern, wie in Fig. 1b zu sehen ist, vielmehr eine beispielsweise mit dem Finger gezogene Linie in der Nähe der Feldgrenze, die als Vorgewende verwendet werden soll (beispielsweise Bereich 111) für die Steuereinheit genügt, um der gesamten Seite die Eigenschaft eines Vorgewendes zuzuordnen. Dies wird erreicht, indem beispielsweise durch Interaktion mit der Eingabeeinrichtung 102 über die Taste 121 der Steuereinheit mitgeteilt wird, dass der markierte Bereich einem Vorgewende entspricht, wobei das Vorgewende sich entlang der markierten Seite des Feldes 110 erstrecken soll und zwar entlang der ganzen Seite des Feldes 110.

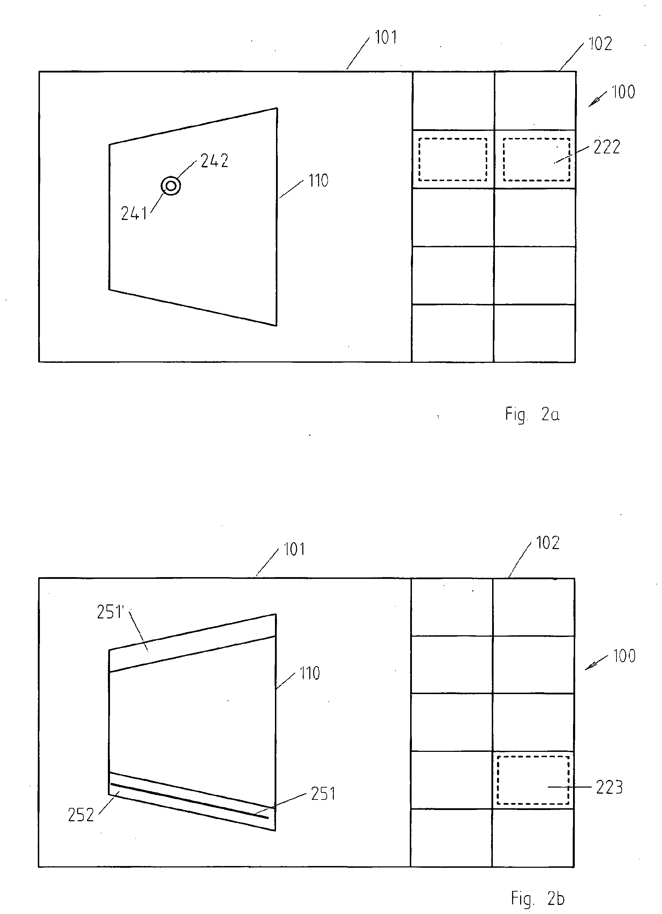

Fig. 2a zeigt eine weitere Ausführungsform der Erfindung, bei der in der Anzeigeeinrichtung 101 vom Benutzer ein punktförmiger oder kreisförmiger Bereich 241 markiert wird. Hier kann durch entsprechende Interaktion mit der Eingabeeinrichtung 102, beispielsweise über andere Tasten 222 als die in Fig. 1b dargestellte, diesem Bereich eine bestimmte Eigenschaft zugeordnet werden und entsprechend dem Bereich 242 auf der Anzeigeeinrichtung markiert werden.

Hier kann vom Benutzer beispielsweise eine Information an die Steuereinheit übergeben werden, dass in diesem Bereich keine Bearbeitung des Feldes möglich oder nötig ist. Ebenso kann es sich hierbei um ein vom Benutzer festgelegtes bekanntes Hindernis handeln, das beim Erstellen von beispielsweise einem Wegplan zum Bearbeiten des Feldes berücksichtigt werden muss. Auch bei der Erstellung des Bereichs 242 können bestimmte Parameter, die spezifisch für die Arbeitsmaschine sind, von der Steuereinheit 100 berücksichtigt werden. So kann beispielsweise die Größe des mit der Eigenschaft markierten Bereichs 242 nicht nur von der Größe des markierten Bereichs 241 abhängen sondern ferner von dem von der Arbeitsmaschine benötigten Weg, um diesen Bereich zu umfahren. Hier können weitere ökonomische Überlegungen mit Hilfe von Parametern einfließen, beispielsweise, mit welchem Aufwand eine trotz des Hindernisses möglichst vollständige Bearbeitung des Feldes möglich ist. So kann der Bereich 242 von der Steuereinheit 100 einerseits möglichst klein festgelegt werden, um das Feld annähernd vollständig zu bearbeiten und andererseits aber gerade so groß, dass die Arbeitsmaschine aufgrund technischer Gegebenheiten in der Lage ist, das Hindernis zu umfahren.

Die Markierung eines Kreises oder Punktes ist nicht beschränkend zu verstehen. Es kann jede geometrische Form auf der Anzeigeeinrichtung markiert werden. Ebenso kann vorgesehen sein, dass die Steuereinheit 100 diesen Bereich durch Interaktion mit der Eingabeeinrichtung nicht von der Bearbeitung ausklammert sondern den innerhalb der Markierung 241 liegenden Bereich als speziell zu bearbeiten markiert oder diesem Bereich andere Eigenschaften zuordnet.

Fig. 2b zeigt eine Ausführungsform, die alternativ zur Ausführungsform, wie sie in Fig. 1a-c beschrieben wurde, genutzt werden kann. Gemäß Fig. 2b wird zur Festlegung eines ersten Vorgewendes 252 vom Benutzer über Berührung der Anzeigeeinrichtung 101 ein Bereich 251 markiert. Wie in Fig. 1a-c beschrieben, wird der Markierung 251 entsprechend ein Vorgewende 252 von der Steuereinheit 100 beispielsweise unter Berücksichtigung gewisser technischer Daten der Arbeitsmaschine erstellt. Zusätzlich dazu wird bei Interaktion mit der Eingabeeinrichtung 102, beispielsweise über die Taste 223, ein weiteres Vorgewende 252' an der gegenüberliegenden Seite des Feldes 110 markiert.

Erfindungsgemäß muss das weitere Vorgewende 252' jedoch nicht an der exakt gegenüberliegenden Seite des Feldes mit Bezug auf das erste Vorgewende 252 erstellt werden. Hier kann beispielsweise durch Interaktion mit der Eingabeeinrichtung 102 vom Benutzer festgelegt werden, dass das zweite Vorgewende 252' von der Steuereinheit 100 so bestimmt werden soll, dass das gesamte Feld mit möglichst wenigen Fahrten bearbeitet werden kann.

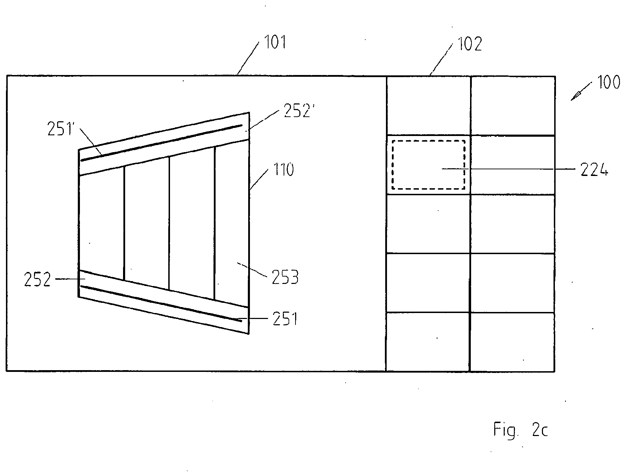

Fig. 2c zeigt eine weitere Ausführungsform, bei der vom Benutzer in der Anzeigeeinrichtung 101 zwei Bereiche 251 und 251' markiert wurden, die über eine entsprechende Eingabe von der Steuereinheit 100 als Bereiche, die als Vorgewende 252 und 252' genutzt werden sollen, markiert wurden. Dabei kann die Erstellung der Vorgewendebereiche 252 und 252' auch gemäß der Ausführungsform nach Fig. 2b erfolgen. In der in Fig. 2c dargestellten Ausführungsform kann der Benutzer durch Interaktion mit der Eingabeeinrichtung 102, beispielsweise über die Taste 224, die Steuereinheit instruieren, Leitlinien 253 zu erstellen, die im Wesentlichen parallel zueinander laufen, und von dem einen Vorgewendebereich 252 zu dem anderen Vorgewendebereich 252' führen. Somit ist es dem Benutzer der Arbeitsmaschine möglich, den Wegplan zum Bearbeiten des Feldes durch Markierung der Vorgewendebereiche auf der Anzeigeeinrichtung 101 und gegebenenfalls durch Markierung von Hindernissen oder speziell zu bearbeitenden Stellen, wie in Fig. 2a beschrieben, und durch Erstellen der Leitlinie 253 möglich.

Da die Vorgewendebereiche 252 und 252' in dem erfindungsgemäßen Verfahren prinzipiell beliebig gesetzt werden können und an prinzipiell beliebigen Positionen Hindernisse oder in besonderer Art und Weise zu bearbeitende Bereiche markiert werden können, erlaubt die Steuereinheit 100 eine individualisierte Erstellung von Wegplänen zum Bearbeiten eines Feldes, indem die notwendigen Leitlinien 253, wie in Fig. 2c dargestellt, auf den individuellen Eingaben des Benutzers basieren können.

## Patentansprüche

1. Steuereinheit (100) für eine landwirtschaftliche Arbeitsmaschine umfassend eine Eingabeeinrichtung (102) und eine Anzeigeeinrichtung (101), die konfiguriert ist, wenigstens ein landwirtschaftlich zu bearbeitendes Feld (110) anzeigen zu können, wobei die Eingabeeinrichtung (102) und die Anzeigeeinrichtung (101) in einem berührungsempfindlichen Bildschirm integriert sind, **dadurch gekennzeichnet, dass** wenigstens ein Bereich (111, 111') des zu bearbeitenden Feldes (110) durch Berührung markiert und diesem Bereich (111, 111') eine Eigenschaft zugeordnet werden kann, wobei der Bereich in der Anzeigeeinrichtung (101) angezeigt werden kann, wobei die Steuereinheit (100) in einem Bereich (111, 111') der Feldgrenze ein Vorgewende (112, 112') anlegen kann, wenn der Bereich (111, 111') markiert wird.

2. Steuereinheit (100) nach Anspruch 1, **dadurch gekennzeichnet, dass** die Steuereinheit (100) das Vorgewende (112, 112') auch in Abhängigkeit von technischen Merkmalen der landwirtschaftlichen Arbeitsmaschine bestimmen kann und das Vorgewende (112, 112') in der Anzeigeeinrichtung (101) angezeigt werden kann.

3. Steuereinheit (100) nach Anspruch 1 oder 2, **dadurch gekennzeichnet, dass** die Steuereinheit (100) Leitlinien (253) erstellen kann, die annähernd parallel verlaufen und die Leitlinien (253) von einer als Vorgewende (252, 252') markierten Seite zu einer anderen als Vorgewende (252, 252') markierten Seite des Feldes verlaufen.

4. Steuereinheit (100) nach einem der Ansprüche 1 bis 3, **dadurch gekennzeichnet, dass** die Breite des Vorgewendes (112, 112') von einer Arbeitsbreite der landwirtschaftlichen Arbeitsmaschine abhängen kann.

5. Steuereinheit (100) nach einem der Ansprüche 1 bis 4, **dadurch gekennzeichnet, dass** eine Vielzahl von landwirtschaftlichen Funktionen in einem internen Speicher der Steuereinheit (100) gespeichert werden können und/oder dass technische Merkmale der landwirtschaftliche Arbeitsmaschine in dem internen Speicher gespeichert werden können und/oder dass geographische Informationen in dem internen Speicher gespeichert werden können und dass die im internen Speicher gespeicherten Daten für das Zuordnen der Eigenschaft zu dem markierten Bereich (111, 111') verwendet werden können.

6. Verfahren zum Erstellen von bestimmten Bereichen für ein landwirtschaftlich zu bearbeitendes Feld (100), wobei basierend auf einer Markierung eines bestimmten Bereichs (111, 111') des Feldes mittels eines berührungsempfindlichen Bildschirms diesem Bereich eine Eigenschaft zugeordnet wird und der Bereich in einer in den berührungsempfindlichen Bildschirm integrierten Anzeigeeinrichtung (101) angezeigt wird, wobei ein Vorgewende (112, 112') angelegt wird, wenn ein Bereich (111, 111') an einer Feldgrenze des Feldes markiert wird.

7. Verfahren nach Anspruch 6, **dadurch gekennzeichnet, dass** das Vorgewende (112, 112') auch in Abhängigkeit von technischen Merkmalen der landwirtschaftlichen Arbeitsmaschine erstellt wird.

8. Verfahren nach einem Anspruch 6 oder 7, **dadurch gekennzeichnet, dass** nach Erstellen des Vorgewendes (252, 252') annähernd parallel verlaufende Leitlinien (253) erstellt werden, die von einer als Vorgewende (252, 252') markierten Seite zu einer anderen als Vorgewende (252, 252') markierten Seite des Feldes verlaufen und wobei die Leitlinien (253) von der Anzeigeeinrichtung (101) angezeigt werden.

9. Verfahren nach einem der Ansprüche 6 bis 8, **dadurch gekennzeichnet, dass** die Breite des Vorgewendes (112, 112') von der Arbeitsbreite der landwirtschaftlichen Arbeitsmaschine abhängt.

10. Verfahren nach einem der Ansprüche 6 bis 9, **dadurch gekennzeichnet, dass** die Feldgrenze des Feldes wenigstens drei Seiten umfasst und basierend auf der Markierung (251) einer ersten Seite als Vorgewende (252) eine zweite, der ersten Seite gegenüberliegende Seite als Vorgewende (252') markiert wird.

11. Verfahren nach einem der Ansprüche 6 bis 10, **dadurch gekennzeichnet, dass** die Eigenschaft dem markierten Bereich in Abhängigkeit von in einem internen Speicher der Steuereinheit (100) gespeicherten Informationen über eine Vielzahl von landwirtschaftlichen Funktionen und/oder technischen Merkmalen der landwirtschaftlichen Arbeitsmaschine und/oder geographische Informationen zugeordnet wird.

## Claims

1. Control unit (100) for an agricultural working machine, comprising an input device (102) and a display device (101) which is configured to be able to display at least one field (110) to be agriculturally treated, the input device (102) and the display device (101) being integrated in a touch-sensitive screen, **characterized in that** the control unit is designed and/or configured in such a manner that at least one region (111, 111') of the field (110) to be treated can be marked by means of touch and a property can be assigned to this region (111, 111'), the region being able to be displayed in the display device (101), wherein the control unit (100) can create a foreland (112, 112') in a region (111, 111') of the field boundary if the region (111, 111') is marked.

2. Control unit (100) according to Claim 1, **characterized in that** the control unit (100) can also determine the foreland (112, 112') on the basis of technical features of the agricultural working machine, and the foreland (112, 112') can be displayed in the display device (101).

3. Control unit (100) according to Claim 1 or 2, **characterized in that** the control unit (100) can create guidelines (253) which run in an approximately parallel manner, and the guidelines (253) run from one side marked as foreland (252, 252') to another side of the field marked as foreland (252, 252').

4. Control unit (100) according to one of Claims 1 to 3, **characterized in that** the width of the foreland (112, 112') can depend on a working width of the agricultural working machine.

5. Control unit (100) according to one of Claims 1 to 4, **characterized in that** a multiplicity of agricultural functions can be stored in an internal memory of the control unit (100), and/or **in that** technical features of the agricultural working machine can be stored in the internal memory, and/or **in that** geographical information can be stored in the internal memory, and **in that** the data stored in the internal memory can be used to assign the property to the marked region (111, 111').

6. Method for creating particular regions for a field (110) to be agriculturally treated, a marking of a particular region (111, 111') of the field being used as a basis for assigning a property to this region using a touch-sensitive screen, and the region being displayed in a display device (101) integrated in the touch-sensitive screen, wherein a foreland (112, 112') is created when a region (111, 111') at a field boundary of the field is marked.

7. Method according to Claim 6, **characterized in that** the foreland (112, 112') is also created on the basis of technical features of the agricultural working machine.

8. Method according to Claim 6 or 7, **characterized in that**, after creating the foreland (252, 252'), guidelines (253) which run in an approximately parallel manner and run from one side marked as foreland (252, 252') to another side of the field marked as foreland (252, 252') are created, the guidelines (253) being displayed by the display device (101).

9. Method according to one of Claims 6 to 8, **characterized in that** the width of the foreland (112, 112') depends on the working width of the agricultural working machine.

10. Method according to one of Claims 6 to 9, **characterized in that** the field boundary of the field comprises at least three sides and the marking (251) of a first side as foreland (252) is used as a basis for marking a second side opposite the first side as foreland (252').

11. Method according to one of Claims 6 to 10, **characterized in that** the property is assigned to the marked region on the basis of information relating to a multiplicity of agricultural functions and/or technical features of the agricultural working machine and/or geographical information stored in an internal memory of the control unit (100).

## Revendications

1. Unité de commande (100) pour un engin agricole, comprenant un système de saisie de données (102) et un système d'affichage (101) qui est configuré pour pouvoir afficher au moins un champ (110) devant être traité au niveau agricole, le système de saisie (102) et le système d'affichage (101) étant intégrés à un écran tactile, **caractérisée en ce qu'**il est possible de marquer, par contact, au moins une zone (111, 111') du champ (110) à traiter, et d'affecter une propriété à cette zone (111, 111'), ladite zone pouvant être affichée par le système d'affichage (101), l'unité de commande (100) étant en mesure de créer une tournière (112, 112') dans une zone (111, 111') de la limite de champ, lorsque la zone (111, 111') a été marquée.

2. Unité de commande (100) selon la revendication 1, **caractérisée en ce que** l'unité de commande (100) peut également définir la tournière (112, 112') en fonction de caractéristiques techniques de l'engin agricole, et la tournière (112, 112') peut être affichée par le système d'affichage (101).

3. Unité de commande (100) selon la revendication 1 ou la revendication 2, **caractérisée en ce que** l'unité de commande (100) est susceptible d'établir des lignes ou bandes directrices (253), qui s'étendent approximativement de manière mutuellement parallèle, et les lignes ou bandes directrices (253) s'étendent à partir d'un côté marqué en tant que tournière (252, 252'), vers un autre côté du champ, marqué en tant que tournière (252, 252').

4. Unité de commande (100) selon l'une des revendications 1 à 3, **caractérisée en ce que** la largeur de la tournière (112, 112') peut dépendre d'une largeur de travail de l'engin agricole.

5. Unité de commande (100) selon l'une des revendications 1 à 4, **caractérisée en ce qu'**une pluralité de fonctions agricoles peuvent être mémorisées dans une mémoire interne de l'unité de commande (100), et/ou **en ce que** des caractéristiques techniques de l'engin agricole peuvent être mémorisées dans la mémoire interne, et/ou **en ce que** des informations géographiques peuvent être mémorisées dans la mémoire interne, et **en ce que** les données mémorisées dans la mémoire interne peuvent être utilisées pour l'affectation de la propriété à la zone (111, 111') marquée.

6. Procédé destiné à établir des zones déterminées pour un champ (110) devant être traité au niveau agricole, procédé d'après lequel sur la base d'un marquage d'une zone (111, 111') déterminée du champ au moyen d'un écran tactile, on affecte à cette zone une propriété, et ladite zone est affichée par un système d'affichage (101) intégré à l'écran tactile, et d'après lequel une tournière (112, 112') est créée lorsque, sur le champ, une zone (111, 111') a été marquée à la limite de champ.

7. Procédé selon la revendication 6, **caractérisé en ce qu'**il est possible d'établir la tournière (112, 112') également en fonction de caractéristiques techniques de l'engin agricole.

8. Procédé selon la revendication 6 ou la revendication 7, **caractérisé en ce qu'**après l'établissement de la tournière (252, 252'), on établit des lignes ou bandes directrices (253) s'étendant approximativement de manière mutuellement parallèle, qui s'étendent à partir d'un côté marqué en tant que tournière (252, 252') vers un autre côté du champ, marqué en tant que tournière (252, 252'), et les lignes ou bandes directrices (253) sont affichées par le système d'affichage (101).

9. Procédé selon l'une des revendications 6 à 8, **caractérisé en ce que** la largeur de la tournière (112, 112') dépend de la largeur de travail de l'engin agricole.

10. Procédé selon l'une des revendications 6 à 9, **caractérisé en ce que** la limite de champ du champ considéré comprend au moins trois côtés, et sur la base du marquage (251) d'un premier côté en tant que tournière (252), on marque un deuxième côté, opposé au premier côté, en tant que tournière (252').

11. Procédé selon l'une des revendications 6 à 10, **caractérisé en ce que** l'on affecte la ladite propriété à la zone marquée, en fonction d'informations, qui sont mémorisées dans une mémoire interne de l'unité de commande (100) et qui concernent une pluralité de fonctions agricoles et/ou des caractéristiques techniques de l'engin agricole et/ou des informations géographiques.
